(19) **Europäisches Patentamt / European Patent Office / Office européen des brevets**

(11) **EP 3 745 421 A1**

(12) **EUROPEAN PATENT APPLICATION**
published in accordance with Art. 153(4) EPC

(43) Date of publication:
02.12.2020 Bulletin 2020/49

(21) Application number: 18902280.9

(22) Date of filing: 14.11.2018

(51) Int Cl.:
$H01B\ 1/06^{(2006.01)}$   $C01F\ 17/00^{(2020.01)}$
$C01G\ 25/00^{(2006.01)}$   $H01M\ 4/13^{(2010.01)}$
$H01M\ 4/62^{(2006.01)}$   $H01M\ 10/052^{(2010.01)}$
$H01M\ 10/0562^{(2010.01)}$

(86) International application number:
PCT/JP2018/042061

(87) International publication number:
WO 2019/146218 (01.08.2019 Gazette 2019/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.01.2018 JP 2018011535

(71) Applicant: Panasonic Intellectual Property
Management Co., Ltd.
Osaka-shi, Osaka 540-6207 (JP)

(72) Inventors:
• SAKAIDA Masashi
Osaka-shi
Osaka 540-6207 (JP)

• ASANO Tetsuya
Osaka-shi
Osaka 540_6207 (JP)
• SAKAI Akihiro
Osaka-shi
Osaka 540-6207 (JP)
• NISHIO Yusuke
Osaka-shi
Osaka 540-6207 (JP)
• MIYAZAKI Akinobu
Osaka-shi
Osaka 540-6207 (JP)
• HASEGAWA Shinya
Osaka-shi
Osaka 540-6207 (JP)

(74) Representative: Grünecker Patent- und
Rechtsanwälte
PartG mbB
Leopoldstraße 4
80802 München (DE)

(54) **SOLID ELECTROLYTE MATERIAL AND BATTERY**

(57) Provide is a solid electrolyte material consisting of Li, M, X, and F, wherein M is Y, or includes Y and at least one kind selected from the group consisting of metalloid elements and metal elements other than Li; X is at least one kind selected from the group consisting of Cl, Br, and I; two or more peaks are present within a range where a value of a diffraction angle 2θ is not less than 24° and not more than 35° in an X-ray diffraction pattern of the solid electrolyte material using Cu-Ka as a radiation source; one or more peaks are present within a range where the value of the diffraction angle 2θ is not less than 40° and less than 48° in the X-ray diffraction pattern of the solid electrolyte material using Cu-Ka as the radiation source; and two or more peaks are present within a range where the value of the diffraction angle 2θ is not less than 48° and not more than 59° in the X-ray diffraction pattern of the solid electrolyte material using Cu-Ka as the radiation source.

FIG. 1

EP 3 745 421 A1

**Description**

BACKGROUND

1. Technical Field

The present disclosure relates to a solid electrolyte material and a battery.

2. Description of the Related Art

Patent Literature 1 discloses an all-solid battery using a sulfide solid electrolyte.
Non-Patent Literature 1 discloses $Li_3YCl_6$.
Non-Patent Literature 2 discloses $Li_3YBr_6$.
Non-Patent Literature 3 discloses $Li_3InBr_3F_3$.

CITATION LIST

Patent Literature

Patent Literature 1: Japanese Patent Application Publication No. 2011-129312

Non-Patent Literature

Non-Patent Literature 1: Z. Anorg. Allg. Chem. 623 (1997), 1067-1073.
Non-Patent Literature 2: Z. Anorg. Allg. Chem. 623 (1997), 1352-1356.
Non-Patent Literature 3: Y. Tomita et. al. Recent Innovations in Chemical Engineering, 2017, 10, 12-17

SUMMARY

In the conventional art, realization of a solid electrolyte material having high lithium ion conductivity is desired.
The solid electrolyte material according to one aspect of the present disclosure consists of Li, M, X, and F, wherein

M is Y, or includes Y and at least one kind selected from the group consisting of metalloid elements and metal elements other than Li;
X is at least one kind selected from the group consisting of Cl, Br, and I;
two or more peaks are present within a range where a value of a diffraction angle $2\theta$ is not less than 24° and not more than 35° in an X-ray diffraction pattern of the solid electrolyte material using Cu-Ka as a radiation source;
one or more peaks are present within a range where the value of the diffraction angle $2\theta$ is not less than 40° and less than 48° in the X-ray diffraction pattern of the solid electrolyte material using Cu-Ka as the radiation source; and
two or more peaks are present within a range where the value of the diffraction angle $2\theta$ is not less than 48° and not more than 59° in the X-ray diffraction pattern of the solid electrolyte material using Cu-Ka as the radiation source.

The solid electrolyte material according to one aspect of the present disclosure consists of Li, M, X, and F, wherein

M is Y, or includes Y and at least one kind selected from the group consisting of metalloid elements and metal elements other than Li;
X is at least one kind selected from the group consisting of Cl, Br, and I;
a reference peak appears within a range where a value of q is not less than 1.76 Å$^{-1}$ and not more than 2.18 Å$^{-1}$ in a first converted pattern provided by converting an X-ray diffraction pattern of the solid electrolyte material in such a manner that a horizontal axis thereof is converted from a diffraction angle $2\theta$ into q;
where

$$q = 4\pi\sin\theta/\lambda;$$

and

λ is a wavelength of an X-ray used for an X-ray diffraction;
one or more peaks appear within a range where a value of q/qo is not less than 1.14 and not more than 1.17 in a second converted pattern provided by converting the X-ray diffraction pattern in such a manner that the horizontal axis thereof is converted from the diffraction angle 2θ into q/qo;
where
qo is a value of q which corresponds to the reference peak in the first converted pattern; and
one or more peaks appear within a range where the value of q/qo is not less than 1.62 and not more than 1.65 in the second converted pattern.

According to the present disclosure, a solid electrolyte material having high lithium ion conductivity can be realized.

BRIEF DESCRIPTION OF THE DRAWINGS

FIG. 1 is a cross-sectional view showing a schematic configuration of a battery 1000 in a third embodiment.
FIG. 2 is a diagram showing peak patterns in XRD.
FIG. 3 is a diagram showing converted patterns.
FIG. 4 is a schematic view showing an evaluation method of ion conductivity.
FIG. 5 is a graph showing an evaluation result of ion conductivity by AC impedance measurement.
FIG. 6 is a graph showing an initial discharge characteristic.

DETAILED DESCRIPTION OF THE EMBODIMENTS

Hereinafter, an embodiment of the present disclosure will be described with reference to the drawings.

(First embodiment)

The solid electrolyte material in the first embodiment is a material consisting of Li (lithium), M, X, and F (fluorine).
M is Y (yttrium), or includes Y and at least one of metalloid elements and metal elements other than Li (lithium).
X is one or more kinds of elements selected from the group consisting of Cl (chlorine), Br (bromine), and I (iodine).
In the X-ray diffraction pattern of the solid electrolyte material in the first embodiment using Cu-Kα as a radiation source, two or more peaks are present within a range where a value of a diffraction angle 2θ is 24° to 35°, a peak is present within a range where the value of the diffraction angle 2θ is 40° to 48°, and two or more peaks are present within a range where the value of the diffraction angle 2θ is 48° to 59°.
According to the above configuration, a solid electrolyte material (halide solid electrolyte material) having high lithium ion conductivity can be realized.
In addition, by using the solid electrolyte material of the first embodiment, an all-solid secondary battery which does not include sulfur can be realized. In other words, the solid electrolyte material of the first embodiment does not have a configuration (for example, the configuration of Patent Literature 1) in which hydrogen sulfide is generated when exposed to the air. As a result, an all-solid secondary battery which does not generate hydrogen sulfide and is excellent in safety can be realized.
The term "metalloid element" refers to B, Si, Ge, As, Sb, and Te.
The term "metal element" refers to all elements included in Groups 1 to 12 of the periodic table except for hydrogen, and all elements included in Groups 13 to 16 of the periodic table except for all the metalloid elements, C, N, P, O, S, and Se. In other words, the metal element becomes a cation when the metal element forms an inorganic compound with a halogen.
M may include Y and one or more kinds of elements selected from the group consisting of Mg, Ca, Sr, Ba, Zn, Sc, Al, Ga, Bi, Zr, Hf, Ti, Sn, Ta, and Nb.
According to the above configuration, the ion conductivity of the solid electrolyte material can be further improved.
M may include Y and one or more kinds of elements selected from the group consisting of Ca, Sr, Ba, Zr, and Al.
According to the above configuration, the ion conductivity of the solid electrolyte material can be further improved.
The solid electrolyte material in the first embodiment may have a peak within a range where the value of the diffraction angle 2θ is 13° to 18° in the X-ray diffraction pattern using Cu-Kα as the radiation source.
According to the above configuration, a solid electrolyte material having higher lithium ion conductivity can be realized.
In the present disclosure, "two peaks are present within a predetermined range (for example, within a range where the value of the diffraction angle 2θ is 24° to 35° or 48° to 59°)" means "two peaks which are clearly separable from each other are present within a predetermined range".

Here, "clearly separable from each other" means that at least $|2\theta_2 - 2\theta_1| > (2\Delta\theta_1 + 2\Delta\theta_2)$ is satisfied, where $2\theta_1$ and $2\theta_2$ are peak positions of two peaks, and $2\Delta\theta_1$ and $2\Delta\theta_2$ are full widths at half maximums of the peaks of $2\theta_1$ and $2\theta_2$, respectively.

The solid electrolyte material in the first embodiment may include a first crystal phase. Examples of the first crystal phase include a crystal phase in which the above-described characteristic diffraction pattern can be provided.

In addition, if measurement intensity is not sufficiently provided, a part of the above-described peak does not have to be observed.

The first crystal phase in which the above-described characteristic diffraction pattern can be provided is not limited to a specific crystal structure, and examples thereof include the following crystal structures.

One is a structure in which a structure of a sublattice of anions is a cubic close-packed structure (face-centered cubic lattice) or an atomic arrangement in which the cubic close-packed structure (face-centered cubic lattice) is distorted. In other words, in the sublattice of the anions, each anion is coordinated to twelve other anions. Among the twelve anions, an inner angle of a triangle formed by two closest anions and the anion at the central position is approximately 60°, each. More specifically, the angle falls within approximately 60° ± 5°.

One example of such a structure is a $Li_3ErBr_6$ (hereinafter, also referred to as LEB) structure having a crystal structure which belongs to the space group C2/m. The detailed atomic arrangement thereof is published in the Inorganic Crystal Structure Database (ICSD) (ICSD No. 50182). Other examples include a spinel structure which belongs to the space group Fd-3m or Imma, and a reverse spinel structure.

The solid electrolyte material in the first embodiment may include a different crystal phase having a crystal structure different from that of the first crystal phase.

According to the above configuration, a solid electrolyte material having higher lithium ion conductivity can be realized. Specifically, by taking a crystal structure such as the first crystal phase, it is conceivable that the anions are attracted more strongly around M, and that a region in which a potential of Li ions is unstable due to mixing of Y with an element other than Y included in M is generated. As a result, a path through which lithium ions diffuse is formed. Further, since the composition lacks Li, an unoccupied site is formed, and lithium ions are easily conducted. For this reason, it is conceivable that lithium ion conductivity is further improved.

In addition, a shape of the solid electrolyte material in the first embodiment is not specifically limited, but may be, for example, an acicular shape, spherical shape, or elliptical spherical shape. For example, the solid electrolyte material in the first embodiment may be particles. After a plurality of particles are stacked, the plurality of the particles may be formed into a pellet shape or a plate shape by pressurization.

For example, if the shape of the solid electrolyte material in the first embodiment is particulate (for example, spherical), the median diameter of the solid electrolyte material may be not less than 0.1 μm and not more than 100 μm.

In the first embodiment, the median diameter of the solid electrolyte material may be not less than 0.5 μm and not more than 10 μm.

According to the above configuration, ion conductivity can be further improved. In addition, a better dispersion state of the solid electrolyte material in the first embodiment and an active material can be formed.

In the first embodiment, the median diameter of the solid electrolyte material may be smaller than the median diameter of the active material.

According to the above configuration, a better dispersion state of the solid electrolyte material in the first embodiment and the active material can be formed.

(Second embodiment)

Hereinafter, the second embodiment will be described. The description which has been set forth in the above-described first embodiment is omitted as appropriate.

The solid electrolyte material in the second embodiment is a material composed of Li (lithium), M, X, and F (fluorine).

M is Y (yttrium), or includes Y and at least one of metalloid elements and metal elements other than Li (lithium).

X is one or more kinds of elements selected from the group consisting of Cl (chlorine), Br (bromine), and I (iodine).

In the solid electrolyte material according to the second embodiment, in a converted pattern in which a horizontal axis of the X-ray diffraction pattern has been converted from the diffraction angle $2\theta$ to $q/q_0$, peaks are present within all ranges where values of the $q/q_0$ are 1.14 to 1.17 and 1.62 to 1.65.

Here, $q = 4\pi\sin\theta/\lambda$. $\lambda$ is a wavelength of the X-ray.

In addition, $q_0$ is a value of q of a peak which is present within a range where the value of q is 1.76 Å$^{-1}$ to 2.18 Å$^{-1}$ in the pattern in which the horizontal axis of the X-ray diffraction pattern is q.

According to the above configuration, a solid electrolyte material (halide solid electrolyte material) having high lithium ion conductivity can be realized.

In addition, by using the solid electrolyte material of the second embodiment, an all-solid secondary battery which does not include sulfur can be realized. In other words, the solid electrolyte material of the second embodiment does not have a configuration (for example, the configuration of Patent Literature 1) in which hydrogen sulfide is generated when exposed to the atmosphere. As a result, an all-solid secondary battery which does not generate hydrogen sulfide and is excellent in safety can be realized.

The term "metalloid element" refers to B, Si, Ge, As, Sb, and Te.

The term "metal element" refers to all elements included in Groups 1 to 12 of the periodic table except for hydrogen, and all elements included in Groups 13 to 16 of the periodic table except for all the metalloid elements, C, N, P, O, S, and Se. In other words, the metal element becomes a cation when the metal element forms an inorganic compound with a halide.

M may include Y and one or more kinds of elements selected from the group consisting of Mg, Ca, Sr, Ba, Zn, Sc, Al, Ga, Bi, Zr, Hf, Ti, Sn, Ta, and Nb.

According to the above configuration, the ion conductivity of the solid electrolyte material can be further improved.

M may include Y and one or more kinds of elements selected from the group consisting of Ca, Sr, Ba, Zr, and Al.

According to the above configuration, the ion conductivity of the solid electrolyte material can be further improved.

The solid electrolyte material in the second embodiment may have peaks within all ranges where the values of $q/q_0$ are 1.88 to 1.94 and 1.9 to 2.1 in the converted pattern.

According to the above configuration, a solid electrolyte material having higher lithium ion conductivity can be realized.

The solid electrolyte material in the second embodiment may include the first crystal phase described above, similarly to the case in the first embodiment.

Examples of the first crystal phase include the crystal phase in which the above-described characteristic converted pattern can be provided.

In addition, if the measurement intensity is not sufficiently provided, the part of the above-described partial peak does not have to be observed.

The solid electrolyte material in the second embodiment may include a different crystal phase having a crystal structure different from that of the first crystal phase.

In the present disclosure, the language "a range where a predetermined value A is a value B to a value C" means "a range where $B \leq A \leq C$".

< Manufacturing method of solid electrolyte material >

The solid electrolyte material in the first or second embodiment may be manufactured by the following method, for example.

Binary halide raw material powders are prepared so as to provide targeted constituent elements. For example, if a solid electrolyte material including Li, Y, Sr, Br, and F is produced, LiBr, $YF_3$, and $SrBr_2$ are prepared. At this time, the composition of the anions can be determined by selecting the kinds of raw material powders. The raw material powders are mixed well, and then, the raw material powders are mixed and ground to react, using a mechanochemical milling method. Subsequently, the raw material powders may be sintered in a vacuum or in an inert atmosphere. Alternatively, the raw material powder may be mixed well, and then sintered in a vacuum or in an inert atmosphere. The sintering may be performed, for example, within a range of 100°C to 650°C for one hour or longer.

Thereby, the solid electrolyte material including the composition as described above is provided.

The structure (the crystal structure) of the crystal phase in the solid material and the position of each peak in the X-ray diffraction pattern (and converted pattern) using Cu-Ka as a radiation source may be determined by adjusting a ratio of the raw materials and by adjusting the reaction method and reaction conditions of the raw material powders.

(Third embodiment)

Hereinafter, the third embodiment will be described. The description which has been set forth in the above-described first or second embodiment is omitted as appropriate.

The battery in the third embodiment is configured using the solid electrolyte material described in the first or second embodiment.

The battery in the third embodiment includes a solid electrolyte material, a positive electrode, a negative electrode, and an electrolyte layer.

The electrolyte layer is a layer provided between the positive electrode and the negative electrode.

At least one of the positive electrode, the electrolyte layer, and the negative electrode includes the solid electrolyte material in the first or second embodiment.

According to the above configuration, the charge / discharge characteristic of the battery can be improved.

A specific example of the battery in the third embodiment will be described below.

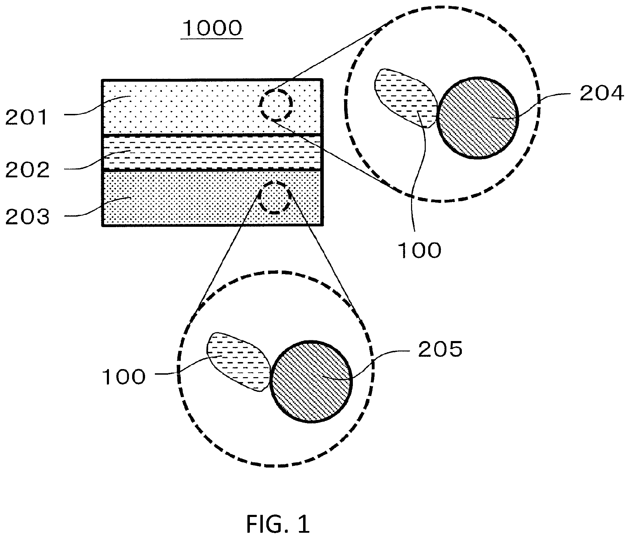

FIG. 1 is a cross-sectional view showing a schematic configuration of a battery 1000 in the third embodiment.

The battery 1000 in the third embodiment includes a positive electrode 201, a negative electrode 203, and an electrolyte layer 202.

The positive electrode 201 includes positive electrode active material particles 204 and solid electrolyte particles 100.

The electrolyte layer 202 is disposed between the positive electrode 201 and the negative electrode 203.

The electrolyte layer 202 includes an electrolyte material (for example, a solid electrolyte material).

The negative electrode 203 includes negative electrode active material particles 205 and solid electrolyte particles 100.

The solid electrolyte particles 100 are particles formed of the solid electrolyte material in the first or second embodiment or particles including the solid electrolyte material in the first or second embodiment as a main component.

The positive electrode 201 includes a material having a property of storing and releasing metal ions (for example, lithium ions). The positive electrode 201 includes, for example, a positive electrode active material (for example, positive electrode active material particles 204).

Examples of the positive electrode active material include a lithium-containing transition metal oxide (e.g., $Li(NiCoAl)O_2$ or $LiCoO_2$), a transition metal fluoride, a polyanionic material fluorinated polyanionic material, a transition metal sulfide, a transition metal oxyfluoride, a transition metal oxysulfide, or a transition metal oxynitride.

The median diameter of the positive electrode active material particles 204 may be not less than 0.1 $\mu$m and not more than 100 $\mu$m. If the median diameter of the positive electrode active material particles 204 is less than 0.1 $\mu$m, there is a possibility that a good dispersion state of the positive electrode active material particles 204 and the halide solid electrolyte material fails to be formed in the positive electrode. As a result, the charge / discharge characteristic of the battery is degraded. In addition, if the median diameter of the positive electrode active material particles 204 is more than 100 $\mu$m, lithium diffusion in the positive electrode active material particles 204 is made slow. As a result, it may be difficult to operate the battery at a high output.

The median diameter of the positive electrode active material particles 204 may be larger than the median diameter of the halide solid electrolyte material. Thereby, a good dispersion state of the positive electrode active material particles 204 and the halide solid electrolyte material can be formed.

With regard to a volume ratio "v : 100 - v" between the positive electrode active material particles 204 and the halide solid electrolyte material included in the positive electrode 201, $30 \leq v \leq 95$ may be satisfied. If v < 30, it may be difficult to secure a sufficient energy density of the battery. In addition, if v > 95, it may be difficult to operate at high output.

The thickness of the positive electrode 201 may be not less than 10 $\mu$m and not more than 500 $\mu$m. If the thickness of the positive electrode is less than 10 $\mu$m, it may be difficult to secure a sufficient energy density of the battery. If the thickness of the positive electrode is more than 500 $\mu$m, it may be difficult to operate at a high output.

The electrolyte layer 202 is a layer including an electrolyte material. The electrolyte material is, for example, a solid electrolyte material. In other words, the electrolyte layer 202 may be a solid electrolyte layer.

The solid electrolyte layer may include the solid electrolyte material in the above-described first or second embodiment as a main component. In other words, the solid electrolyte layer may include the solid electrolyte material in the above-described first or second embodiment, for example, at a weight ratio of not less than 50% (not less than 50% by weight) with respect to the entire solid electrolyte layer.

According to the above configuration, the charge / discharge characteristic of the battery can be further improved.

In addition, the solid electrolyte layer may include the solid electrolyte material in the above-described first or second embodiment, for example, at a weight ratio of not less than 70% (not less than 70% by weight) with respect to the entire solid electrolyte layer.

According to the above configuration, the charge / discharge characteristic of the battery can be further improved.

The solid electrolyte layer may include the solid electrolyte material in the above-described first or second embodiment as the main component thereof, and the solid electrolyte layer may further include inevitable impurities. The solid electrolyte layer may include the starting materials used for the synthesis of the solid electrolyte material. The solid electrolyte layer may include by-products or decomposition products generated when the solid electrolyte material is synthesized.

In addition, the solid electrolyte layer may include the solid electrolyte material in the first or second embodiment, for example, at a weight ratio of 100% (100% by weight) with respect to the entire solid electrolyte layer, except for the inevitable impurities.

According to the above configuration, the charge / discharge characteristic of the battery can be further improved.

As described above, the solid electrolyte layer may be composed only of the solid electrolyte material in the first or second embodiment.

Alternatively, the solid electrolyte layer may be composed only of a solid electrolyte material different from the solid electrolyte material in the first or second embodiment. As the solid electrolyte material different from the solid electrolyte material in the first or second embodiment, for example, $Li_2MgX_4$, $Li_2FeX_4$, $Li(Al,Ga,In)X_4$, $Li_3(Al,Ga,In)X_6$, or LiI (X: F, Cl, Br, I) may be used.

The solid electrolyte layer may simultaneously include the solid electrolyte material in the first or second embodiment and the solid electrolyte material different from the solid electrolyte material in the first or second embodiment. At this time, both may be dispersed uniformly. A layer formed of the solid electrolyte material in the first or second embodiment and a layer formed of the solid electrolyte material different from the solid electrolyte material in the above-described first or second embodiment may be sequentially arranged in a stacking direction of the battery.

The thickness of the solid electrolyte layer may be not less than 1 $\mu$m and not more than 1,000 $\mu$m. If the thickness of the solid electrolyte layer is less than 1 $\mu$m, the possibility that the positive electrode 201 and the negative electrode 203 are shortcircuited increases. In addition, if the thickness of the solid electrolyte layer is more than 1,000 $\mu$m, it may be difficult to operate at a high output.

The negative electrode 203 includes a material having a property of storing and releasing metal ions (for example, lithium ions). The negative electrode 203 includes, for example, a negative electrode active material (for example, negative electrode active material particles 205).

As the negative electrode active material, a metal material, a carbon material, an oxide, a nitride, a tin compound, or a silicon compound may be used. The metal material may be a single metal. Alternatively, the metal material may be an alloy. Examples of the metal material include lithium metal and a lithium alloy. Examples of the carbon material include natural graphite, coke, graphitized carbon, carbon fiber, spherical carbon, artificial graphite, and amorphous carbon. From the viewpoint of capacity density, silicon (Si), tin (Sn), a silicon compound, or a tin compound may be preferably used. If a negative electrode active material having a low average reaction voltage is used, the effect of suppressing electrolysis by the solid electrolyte material in the first or second embodiment is better exhibited.

The median diameter of the negative electrode active material particles 205 may be not less than 0.1 $\mu$m and not more than 100 $\mu$m. If the median diameter of the negative electrode active material particles 205 is less than 0.1 $\mu$m, there is a possibility that a good dispersion state of the negative electrode active material particles 205 and the solid electrolyte particles 100 fails to be formed in the negative electrode. Thereby, the charge / discharge characteristic of the battery is lowered. On the other hand, if the median diameter of the negative electrode active material particles 205 is more than 100 $\mu$m, lithium diffusion in the negative electrode active material particles 205 is made slow. As a result, it may be difficult to operate the battery at a high output.

The median diameter of the negative electrode active material particles 205 may be larger than the median diameter of the solid electrolyte particles 100. Thereby, a good dispersion state of the negative electrode active material particles 205 and the halide solid electrolyte material can be formed.

With regard to a volume ratio "v : 100 - v" between the negative electrode active material particles 205 and the solid electrolyte particles 100 included in the negative electrode 203, $30 \leq v \leq 95$ may be satisfied. If v < 30, it may be difficult to secure a sufficient energy density of the battery. In addition, if v > 95, it may be difficult to operate at high output.

The thickness of the negative electrode 203 may be not less than 10 $\mu$m and not more than 500 $\mu$m. If the thickness of the negative electrode is less than 10 $\mu$m, it may be difficult to secure a sufficient energy density of the battery. In addition, if the thickness of the negative electrode is more than 500 $\mu$m, it may be difficult to operate at a high output.

At least one of the positive electrode 201, the electrolyte layer 202, and the negative electrode 203 may include a sulfide solid electrolyte or an oxide solid electrolyte for the purpose of enhancing ion conductivity, chemical stability, or electrochemical stability. As the sulfide solid electrolyte, $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, or $Li_{10}GeP_2S_{12}$ may be used. As the oxide solid electrolyte, a NASICON solid electrolyte such as $LiTi_2(PO_4)_3$ and its element substitution products, a $(LaLi)TiO_3$ perovskite solid electrolyte, a LISICON solid electrolyte such as $Li_{14}ZnGe_4O_{16}$, $Li_4SiO_4$, $LiGeO_4$, and their element substitution products, a garnet solid electrolyte such as $Li_7La_3Zr_2O_{12}$ and its element substitution products, $Li_3N$ and its H substitution products, and $Li_3PO_4$ and its N substitution products may be used.

At least one of the positive electrode 201, the electrolyte layer 202, and the negative electrode 203 may include an organic polymer solid electrolyte for the purpose of increasing ion conductivity. As the organic polymer solid electrolyte, for example, a compound of a polymer compound and a lithium salt may be used. The polymer compound may have an ethylene oxide structure. Due to the ethylene oxide structure, a large amount of lithium salt may be included to further increase the ion conductivity. As the lithium salt, $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, or $LiC(SO_2CF_3)_3$ may be used. As the lithium salt, one kind of lithium salt selected from these may be used alone. Alternatively, a mixture of two or more kinds of lithium salts selected from these may be used as the lithium salt.

At least one of the positive electrode 201, the electrolyte layer 202, and the negative electrode 203 may include a non-aqueous electrolyte solution, a gel electrolyte, or an ionic liquid for the purpose of facilitating the exchange of lithium ions and improving the output characteristic of the battery.

The non-aqueous electrolyte solution includes a non-aqueous solvent and a lithium salt which has been dissolved in the non-aqueous solvent. As the non-aqueous solvent, a cyclic carbonate solvent, a chain carbonate solvent, a cyclic ether solvent, a chain ether solvent, a cyclic ester solvent, a chain ester solvent, or a fluorine solvent may be used. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include $\gamma$-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. As the non-aqueous solvent, one kind of non-aqueous solvent selected from these may be used alone. Alternatively, a combination of two or more kinds of non-aqueous solvents selected from these may be used as the non-aqueous solvent. The non-aqueous electrolyte solution may include at least one kind of fluorine solvent selected from the group consisting of fluoroethylene carbonate, methyl fluoropropionate, fluorobenzene, fluoroethyl methyl carbonate, and fluorodimethylene carbonate. As the lithium salt, $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, or $LiC(SO_2CF_3)_3$ may be used. As the lithium salt, one kind of lithium salt selected from these may be used alone. Alternatively, a mixture of two or more kinds of lithium salts selected from these may be used as the lithium salt. The concentration of the lithium salt is, for example, within the range of 0.5 to 2 mol/liter.

As the gel electrolyte, a polymer material including the non-aqueous electrolyte solution can be used. As the polymer material, polyethylene oxide, polyacrylonitrile, polyvinylidene fluoride, polymethyl methacrylate, or a polymer having an ethylene oxide bond may be used.

The cation forming the ionic liquid may be:

an aliphatic chain quaternary salt such as tetraalkylammonium or tetraalkylphosphonium, an aliphatic cyclic ammonium such as pyrrolidinium, morpholinium, imidazolinium, tetrahydropyrimidinium, piperazinium, or piperidinium; or a nitrogen-containing heterocyclic aromatic cation such as pyridinium or imidazolium.

The anion forming the ionic liquid may be $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, or $C(SO_2CF_3)_3^-$. The ionic liquid may include a lithium salt.

At least one of the positive electrode 201, the electrolyte layer 202, and the negative electrode 203 may include a binder for the purpose of improving the adhesion between the particles. The binder is used to improve the binding property of the material forming the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, methyl polyacrylate ester, ethyl polyacrylate ester, hexyl polyacrylate ester, polymethacrylic acid, methyl polymethacrylate ester, ethyl polymethacrylate ester, hexyl polymethacrylate ester, polyvinyl acetate, polyvinylpyrrolidone, polyether, polyethersulfone, hexafluoropolypropylene, styrene butadiene rubber, and carboxymethylcellulose. As the binder, a copolymer of two or more kinds of materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may be used. In addition, two or more kinds of selected from these may be mixed and used as the binder.

In addition, at least one of the positive electrode 201 and the negative electrode 203 may include a conductive agent as necessary.

The conductive agent is used to lower electrode resistance. Examples of the conductive agent include graphite such as natural graphite or artificial graphite; carbon black such as acetylene black or ketjen black; a conductive fiber such as a carbon fiber or a metal fiber; carbon fluoride; a metal powder such as aluminum; a conductive whisker such as zinc oxide or potassium titanate; a conductive metal oxide such as titanium oxide; or a conductive polymer compound such as polyaniline, polypyrrole, or polythiophene. Cost reduction can be achieved by using a carbon conductive agent as the conductive agent.

An example of the shape of the battery in the third embodiment may be a coin, a cylinder, a prism, a sheet, a button, a flat type, or a stacking structure.

EXAMPLES

Hereinafter, details of the present disclosure will be described with reference to inventive examples and comparative example.

<< Inventive example 1 >>

[Production of Solid Electrolyte Material]

In an argon atmosphere with a dew point of -60°C or less, 493 mg of LiBr, 415 mg of $YBr_3$, and 92 mg of $YF_3$ were prepared and mixed. Subsequently, milling processing was performed at 500 rpm for 12 hours using a planetary ball mill.

[Analysis of Crystal Structure]

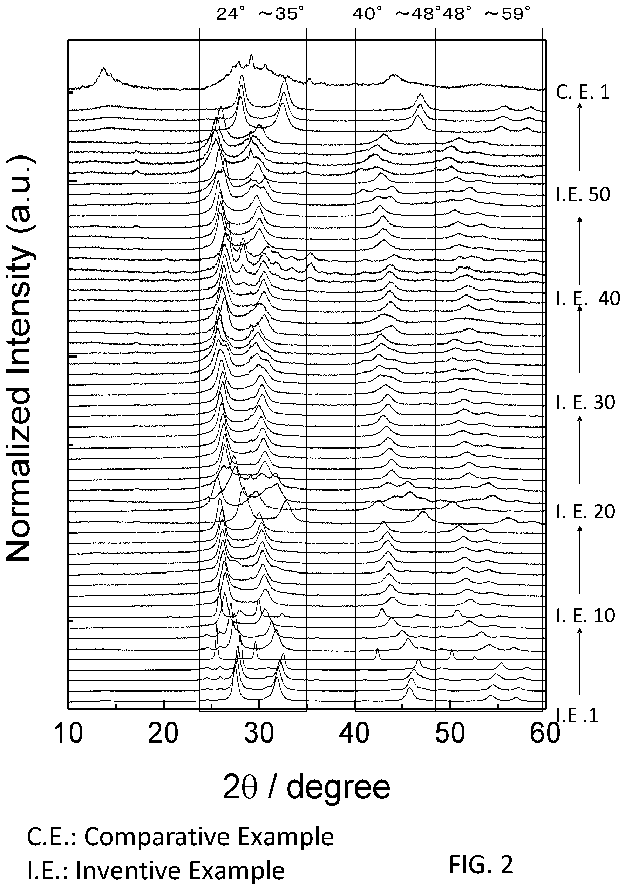

FIG. 2 is a graph showing an XRD pattern.
The results shown in FIG. 2 were measured by the following method.
In other words, for analysis of the crystal structure of the solid electrolyte, an X-ray diffraction pattern was measured in a dry environment having a dew point of -45°C or less using an X-ray diffraction device (manufactured by RIGAKU Corporation, MiniFlex 600). For the X-ray source, a Cu-Ka ray was used. In other words, X-ray diffraction was measured by a θ-2θ method using a Cu-Ka ray (wavelengths of 1.5405 Å and 1.5444 Å) as the X-ray.
In the X-ray diffraction pattern of the inventive example 1, peaks each having relatively high intensity were observed at 27.50°, 31.88°, 45.68°, 54.20°, and 56.90°.
The peak position of these peak substantially accorded with a part of peak positions of the X-ray diffraction pattern observed from an LEB phase.

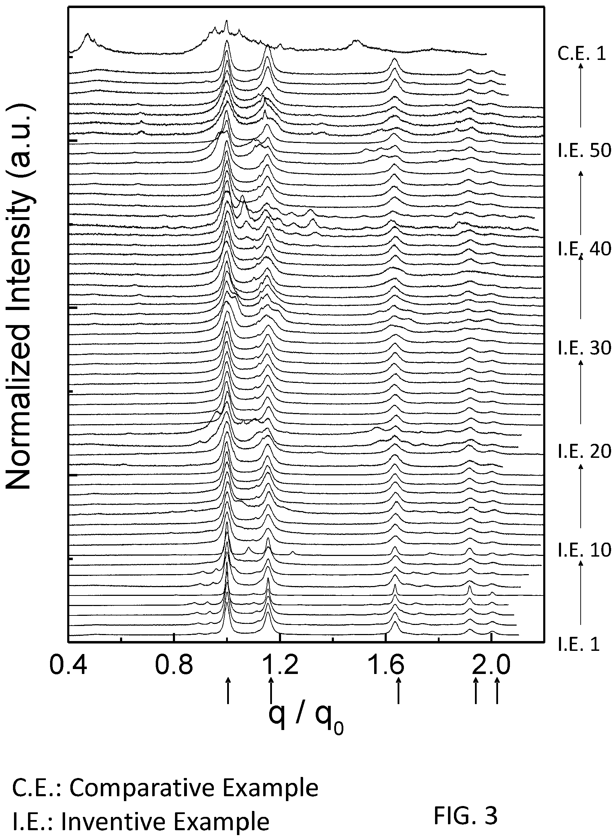

FIG. 3 is a diffraction pattern in which the horizontal axis 2θ of the above XRD pattern has been converted with $q = 4\pi \sin(\theta)/\lambda$, and the value of q/qo normalized with qo = 1.940 $Å^{-1}$, which is the value of q in the above-described peak position 2θ = 27.50°, has been taken on the horizontal axis. In FIG. 3, peaks were observed at the positions of q/qo = 1.00, 1.155, 1.633, 1.917, and 2.004. These peak positions are illustrated by arrows in FIG. 3.

[Evaluation of Lithium Ion Conductivity]

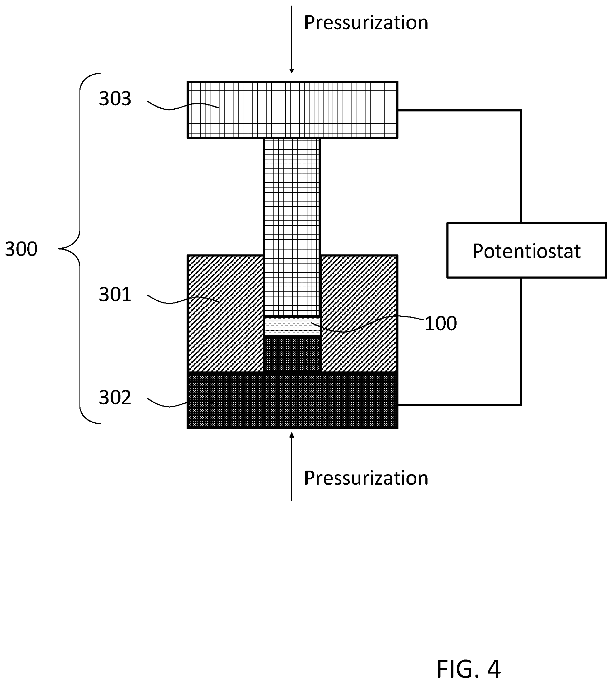

FIG. 4 is a schematic diagram showing an evaluation method of ion conductivity.
A pressure-molding die 300 is composed of a frame 301 formed of an electronically insulating polycarbonate, and an upper punch part 303 and a lower punch part 302, both of which are formed of electron conductive stainless steel.
Ion conductivity was evaluated by the following method using the configuration shown in FIG. 4.
In a dry atmosphere with a dew point of -30°C or lower, the inside of the pressure-molding die 300 was filled with the powder of the solid electrolyte material of the inventive example 1, and was uniaxially pressed at 400 MPa to produce a conductivity measurement cell of the inventive example 1.
In a pressurized state, lead wires were routed from the upper punch part 303 and the lower punch part 302 and were connected to a potentiostat (Princeton Applied Research, VersaSTAT 4) equipped with a frequency response analyzer. The ion conductivity at room temperature was measured by an electrochemical impedance measurement method.

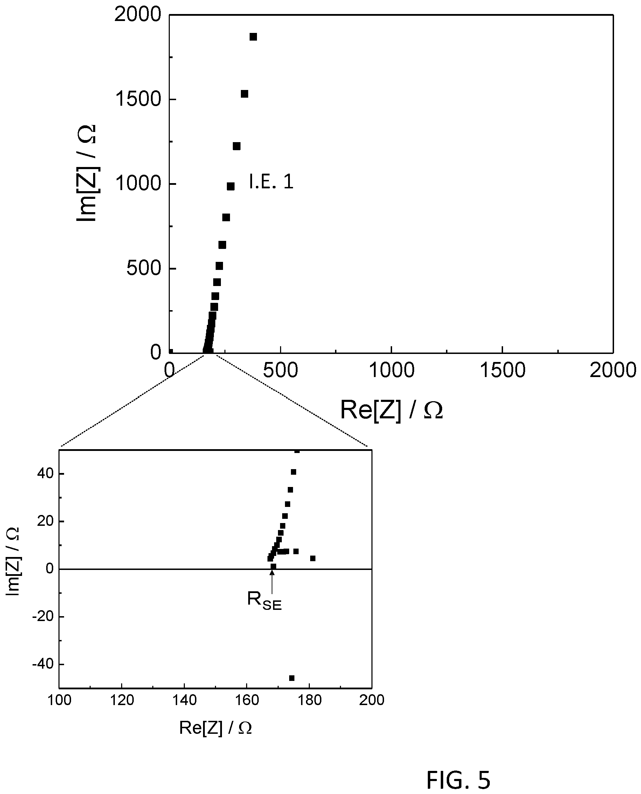

FIG. 5 shows a Cole-Cole diagram of the results of the impedance measurement.
In FIG. 5, a real value of the impedance at the measurement point (arrow in FIG. 5) having the smallest absolute value of the phase of the complex impedance was deemed to be the resistance value for the ion conduction of the solid electrolyte of the inventive example 1.
The ion conductivity was calculated from the following formula (2) using the resistance value of the electrolyte.

$$\sigma = (R_{SE} \times S/t)^{-1} \quad (2)$$

where σ is ion conductivity, S is an electrolyte area (inner diameter of the frame 301 in FIG. 4), R is the resistance value of the solid electrolyte in the above-mentioned impedance measurement, and t is a thickness of the electrolyte (in FIG. 4, the thickness of the compressed body of the plurality of the solid electrolyte particles 100).
The ion conductivity of the solid electrolyte material of the inventive example 1 measured at 22°C was $2.6 \times 10^{-4}$ S/cm.

<< Inventive examples 2 to 57 >>

Hereinafter, the synthesis and evaluation methods of the inventive examples 2 to 57 will be described.

[Production of Solid Electrolyte Material]

In the inventive examples 2 to 57, raw material powders were prepared in a glove box maintained in a dry / low oxygen atmosphere having a dew point of -60°C or lower and an oxygen value of 5 ppm or lower. The mixing ratio in each of the inventive examples 2 to 57 is shown in Table 1, which will be shown later.
Except for these, the solid electrolyte materials of the inventive examples 2 to 57 were prepared in the same manner as in the inventive example 1.

[Analysis of Crystal Structure]

The crystal structures of the solid electrolyte materials of the inventive examples 2 to 57 were measured in the same manner as in the inventive example 1 above.
The X-ray diffraction patterns of the inventive examples 2 to 57 are shown in FIG. 2. The values of $2\theta$ of the peaks are described in Table 2, which will be shown later.
Similarly to the case of the inventive example 1, a diffraction pattern (i.e., converted pattern) in which the horizontal axis $2\theta$ of the XRD pattern shown in FIG. 2 has been converted with $q = 4\pi\sin(\theta)/\lambda$, and the value of $q/q_0$ normalized with $q_0$ has been taken on the horizontal axis is shown in FIG. 3. Here, $q_0$ is the value of $q$ of the peak of the lower angle included in two peaks within the range of $2\theta = 24°$ to $35°$, and each of the two peaks has high intensity. The values of $q/q_0$ of the peaks are described in Table 3, which will be shown later.
The provided X-ray diffraction pattern of each of the solid electrolyte materials of the inventive examples 2 to 57 was analyzed. As a result, in all of the inventive examples 2 to 57, the sublattice of the anions was the same as that of the LEB structure in which the cubic close-packed structure was distorted or that of the spinel structure, which is a cubic close-packed structure.

[Evaluation of Lithium Ion Conductivity]

In a glove box kept in a dry / low oxygen atmosphere having a dew point of -90°C or less and an oxygen value of 5 ppm or less, a conductivity measurement cell of each of the inventive examples 2 to 57 was produced in the same method as in the inventive example 1.
Except for this, ion conductivity was measured in the same manner as in the inventive example 1.
The ion conductivities in the inventive examples 2 to 57 are shown in Tables 2 and 3, both of which will be shown later.

[Production of Secondary Battery]

In an argon glove box, the solid electrolyte material of the inventive example 31 and graphite, which was an active material, were prepared at a volume ratio of 50:50. These were mixed in an agate mortar to prepare a mixture.
In the insulating outer cylinder, $Li_3PS_4$ which corresponded to a thickness of 700 $\mu$m and 13.3 mg of the above-mentioned mixture were stacked in this order. This was pressure-molded at a pressure of 300 MPa to provide a first electrode and a solid electrolyte layer.
Next, metal In (thickness: 200 $\mu$m), metal Li (thickness: 300 $\mu$m), and metal In (thickness: 200 $\mu$m) were stacked in this order at a volume ratio of 1.1: 1 : 1.1 on the surface opposite to the surface which was in contact with the first electrode of the solid electrolyte layer. This was pressure-molded at a pressure of 80 MPa to produce a stacking structure composed of the first electrode, the solid electrolyte layer, and a second electrode.
Next, stainless steel current collectors were placed on the upper and lower parts of the stacking structure, and current collector leads were attached to the current collectors.
Finally, an insulating ferrule was used to block and seal the inside of the insulating outer cylinder from the outside atmosphere.
In this way, the secondary battery of the inventive example 31 was produced.

[Charge / Discharge Test]

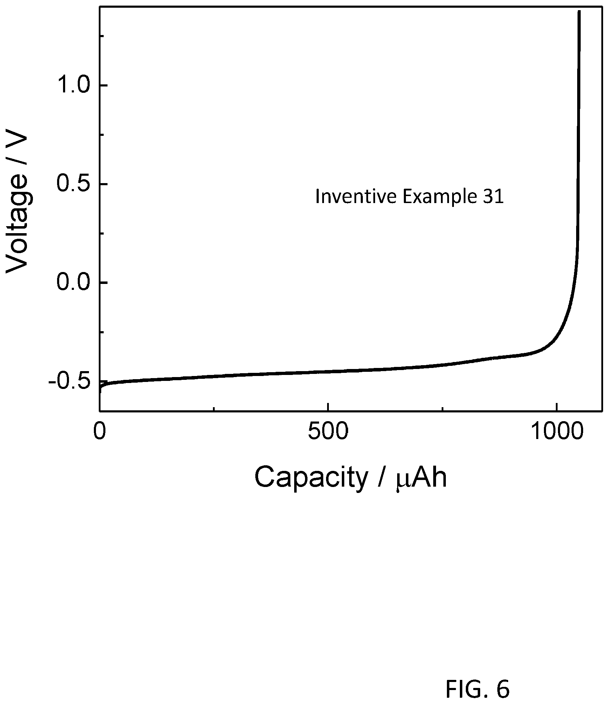

FIG. 6 is a graph showing an initial discharge characteristic.
The results shown in FIG. 6 were measured by the following method.
In other words, the secondary battery of the inventive example 31 was placed in a thermostatic chamber at 25°C
The battery was charged with a constant current at a current value of 0.05C rate (20 hour rate) with respect to the theoretical capacity of the battery. The charge was terminated at a voltage of -0.62 V.
Next, the battery was discharged at a current value of 0.05C rate. The discharge was terminated at a voltage of 1.38 V. As used herein, the charge means that a reaction in which Li is inserted into graphite proceeds, and the discharge means that a reaction in which Li is released from the graphite proceeds.

As a result of the above measurement, the initial discharge capacity of the secondary battery of the inventive example 31 was 1,005 μAh.

<< Comparative example >>

16 mg of LiF, 828 mg of $YBr_3$, and 156 mg of $SrBr_2$ were mixed as the raw material powders of the solid electrolyte.
Except this, synthesis, evaluation and analysis were performed in the same manner as in the inventive example 1.
The ion conductivity measured at 22°C was $1.0 \times 10^{-7}$ S/cm.
From the X-ray diffraction pattern, two or more peaks that were separable within the range of 24° to 35° and a peak within the range of 40° to 48° was observed; however, two or more peaks that were separable within the range of 48° to 59° were not observed.
Tables 1 to 3 show the configurations and the evaluation results in the inventive examples 1 to 57 and the comparative example.

[Table 1]

| | Constituent element | | | Li source | | Y source | | M source | |
|---|---|---|---|---|---|---|---|---|---|
| | Li,Y, F | M | X | Chemical Formula | Mixture ratio | Chemical Formula | Mixture ratio | Chemical Formula | Mixture ratio |
| I.E. 1 | Li,Y, F | None | Br | LiBr | 0.493 | $YF_3$ | 0.092 | | |
| | | | | | | $YBr_3$ | 0.415 | | |
| I.E. 2 | Li,Y, F | None | Br | LiBr | 0.523 | $YF_3$ | 0.147 | | |
| | | | | | | $YBr_3$ | 0.330 | | |
| I.E. 3 | Li,Y, F | None | Br | LiBr | 0.557 | $YF_3$ | 0.208 | | |
| | | | | | | $YBr_3$ | 0.234 | | |
| I.E. 4 | Li,Y, F | None | Br | LiBr | 0.641 | $YF_3$ | 0.359 | | |
| I.E. 5 | Li,Y, F | None | I | LiI | 0.733 | $YF_3$ | 0.267 | | |
| I.E. 6 | Li,Y, F | None | Br,I | LiBr | 0.442 | $YF_3$ | 0.198 | | |
| | | | | LiI | 0.136 | $YBr_3$ | 0.223 | | |
| I.E. 7 | Li,Y, F | None | Br,I | LiBr | 0.383 | $YF_3$ | 0.322 | | |
| | | | | LiI | 0.295 | | | | |
| I.E. 8 | Li,Y, F | None | Br,I | LiBr | 0.155 | $YF_3$ | 0.173 | | |
| | | | | LiI | 0.477 | $YBr_3$ | 0.195 | | |
| I.E. 9 | Li,Y, F | None | Br,I | LiBr | 0.174 | $YF_3$ | 0.292 | | |
| | | | | LiI | 0.535 | | | | |
| I.E. 10 | Li,Y, F | None | Br,I | LiBr | 0.204 | $YF_3$ | 0.175 | | |
| | | | | LiI | 0.483 | $YBr_3$ | 0.138 | | |
| I.E. 11 | Li,Y, F | None | Br,I | LiBr | 0.107 | $YF_3$ | 0.171 | | |
| | | | | LiI | 0.471 | $YBr_3$ | 0.251 | | |
| I.E. 12 | Li,Y, F | None | Br,I | LiBr | 0.084 | $YF_3$ | 0.170 | | |
| | | | | LiI | 0.468 | $YBr_3$ | 0.278 | | |

(continued)

| | Constituent element | | | Li source | | Y source | | M source | |
|---|---|---|---|---|---|---|---|---|---|
| | Li,Y,F | M | X | Chemical Formula | Mixture ratio | Chemical Formula | Mixture ratio | Chemical Formula | Mixture ratio |
| I.E. 13 | Li,Y,F | None | Br,I | LiBr | 0.060 | $YF_3$ | 0.169 | | |
| | | | | LiI | 0.466 | $YBr_3$ | 0.305 | | |
| I.E. 14 | Li,Y,F | None | Br,I | LiBr | 0.038 | $YF_3$ | 0.168 | | |
| | | | | LiI | 0.463 | $YBr_3$ | 0.331 | | |
| I.E. 15 | Li,Y,F | None | Br,I | LiI | 0.459 | $YF_3$ | 0.167 | | |
| | | | | | | $YBr_3$ | 0.374 | | |
| I.E. 16 | Li,Y,F | None | Br,I | LiBr | 0.071 | $YF_3$ | 0.119 | | |
| | | | | LiI | 0.544 | $YBr_3$ | 0.267 | | |
| I.E. 17 | Li,Y,F | None | Br,I | LiI | 0.629 | $YF_3$ | 0.114 | | |
| | | | | | | $YBr_3$ | 0.257 | | |
| I.E. 18 | Li,Y,F | None | Cl,Br | LiBr | 0.604 | $YF_3$ | 0.169 | | |
| | | | | | | $YCl_3$ | 0.226 | | |
| I.E. 19 | Li,Y,F | None | Cl,I | LiCl | 0.090 | $YF_3$ | 0.207 | | |
| | | | | LiI | 0.567 | $YCl_3$ | 0.136 | | |
| I.E. 20 | Li,Y,F | Ca | Br,I | LiBr | 0.353 | $YF_3$ | 0.198 | CaBr2 | 0.224 |
| | | | | LiI | 0.136 | $YBr_3$ | 0.089 | | |
| I.E. 21 | Li,Y,F | Ca | Br,I | LiBr | 0.210 | $YF_3$ | 0.188 | CaBr2 | 0.290 |
| | | | | LiI | 0.259 | $YBr_3$ | 0.053 | | |
| I.E. 22 | Li,Y,F | Ca | Br,I | LiBr | 0.163 | $YF_3$ | 0.174 | CaBr2 | 0.018 |
| | | | | LiI | 0.479 | $YBr_3$ | 0.166 | | |
| I.E. 23 | Li,Y,F | Ca | Br,I | LiBr | 0.171 | $YF_3$ | 0.175 | CaBr2 | 0.036 |
| | | | | LiI | 0.480 | $YBr_3$ | 0.138 | | |
| I.E. 24 | Li,Y,F | Ca | Br,I | LiBr | 0.108 | $YF_3$ | 0.172 | CaBr2 | 0.053 |
| | | | | LiI | 0.474 | $YBr_3$ | 0.194 | | |
| I.E. 25 | Li,Y,F | Ca | Br,I | LiBr | 0.084 | $YF_3$ | 0.171 | CaBr2 | 0.079 |
| | | | | LiI | 0.472 | $YBr_3$ | 0.193 | | |
| I.E. 26 | Li,Y,F | Ca | Br,I | LiBr | 0.061 | $YF_3$ | 0.171 | CaBr2 | 0.105 |
| | | | | LiI | 0.470 | $YBr_3$ | 0.192 | | |
| I.E. 27 | Li,Y,F | Ca | Br,I | LiI | 0.466 | $YF_3$ | 0.169 | CaBr2 | 0.174 |
| | | | | | | $YBr_3$ | 0.191 | | |
| I.E. 28 | Li,Y,F | Ca | Br,I | LiBr | 0.060 | $YF_3$ | 0.169 | CaBr2 | 0.017 |
| | | | | LiI | 0.465 | $YBr_3$ | 0.288 | | |
| I.E. 29 | Li,Y,F | Ca | Br,I | LiBr | 0.061 | $YF_3$ | 0.170 | CaBr2 | 0.035 |
| | | | | LiI | 0.468 | $YBr_3$ | 0.266 | | |
| I.E. 30 | Li,Y,F | Ca | Br,I | LiBr | 0.061 | $YF_3$ | 0.172 | CaBr2 | 0.159 |
| | | | | LiI | 0.473 | $YBr_3$ | 0.135 | | |

(continued)

| | Constituent element | | | Li source | | Y source | | M source | |
|---|---|---|---|---|---|---|---|---|---|
| | Li,Y,F | M | X | Chemical Formula | Mixture ratio | Chemical Formula | Mixture ratio | Chemical Formula | Mixture ratio |
| I.E. 31 | Li,Y,F | Ca | Br,I | LiBr | 0.062 | $YF_3$ | 0.173 | CaBr2 | 0.213 |
| | | | | LiI | 0.475 | $YBr_3$ | 0.078 | | |
| I.E. 32 | Li,Y,F | Ca | Br,I | LiBr | 0.038 | $YF_3$ | 0.172 | CaBr2 | 0.266 |
| | | | | LiI | 0.475 | $YBr_3$ | 0.049 | | |
| I.E. 33 | Li,Y,F | Ca | Br,I | LiBr | 0.039 | $YF_3$ | 0.173 | CaBr2 | 0.310 |
| | | | | LiI | 0.477 | | | | |
| I.E. 34 | Li,Y,F | Ca | Br,I | LiBr | 0.046 | $YF_3$ | 0.172 | CaBr2 | 0.230 |
| | | | | LiI | 0.474 | $YBr_3$ | 0.078 | | |
| I.E. 35 | Li,Y,F | Ca | Br,I | LiI | 0.471 | $YF_3$ | 0.171 | CaBr2 | 0.281 |
| | | | | | | $YBr_3$ | 0.077 | | |
| I.E. 36 | Li,Y,F | Ca | Br,I | LiBr | 0.124 | $YF_3$ | 0.174 | CaBr2 | 0.143 |
| | | | | LiI | 0.480 | $YBr_3$ | 0.078 | | |
| I.E. 37 | Li,Y,F | Ca | Br,I | LiBr | 0.062 | $YF_3$ | 0.173 | CaBr2 | 0.195 |
| | | | | LiI | 0.475 | $YBr_3$ | 0.095 | | |
| I.E. 38 | Li,Y,F | Sr | Br,I | LiBr | 0.106 | $YF_3$ | 0.170 | SrBr2 | 0.065 |
| | | | | LiI | 0.468 | $YBr_3$ | 0.191 | | |
| I.E. 39 | Li,Y,F | Sr | Br,I | LiBr | 0.060 | $YF_3$ | 0.167 | SrBr2 | 0.127 |
| | | | | LiI | 0.459 | $YBr_3$ | 0.188 | | |
| I.E. 40 | Li,Y,F | Ba | Br,I | LiBr | 0.105 | $YF_3$ | 0.168 | BaBr2 | 0.077 |
| | | | | LiI | 0.462 | $YBr_3$ | 0.189 | | |
| I.E. 41 | Li,Y,F | Ba | Br,I | LiBr | 0.058 | $YF_3$ | 0.163 | BaBr2 | 0.149 |
| | | | | LiI | 0.447 | $YBr_3$ | 0.183 | | |
| I.E. 42 | Li,Y,F | Ba | Br,I | LiBr | 0.430 | $YF_3$ | 0.156 | BaBr2 | 0.238 |
| | | | | LiI | 0.156 | $YBr_3$ | 0.176 | | |
| I.E. 43 | Li,Y,F | Ba | Br,I | LiBr | 0.056 | $YF_3$ | 0.156 | BaBr2 | 0.287 |
| | | | | LiI | 0.431 | $YBr_3$ | 0.070 | | |
| I.E. 44 | Li,Y,F | Ca | Br,I | LiBr | 0.045 | $YF_3$ | 0.151 | CaBr2 | 0.207 |
| | | | | LiI | 0.484 | $YBr_3$ | 0.113 | | |
| I.E. 45 | Li,Y,F | Ca | Br,I | LiBr | 0.037 | $YF_3$ | 0.140 | CaBr2 | 0.204 |
| | | | | LiI | 0.489 | $YBr_3$ | 0.130 | | |
| I.E. 46 | Li,Y,F | Ca | Br,I | LiBr | 0.015 | $YF_3$ | 0.130 | CaBr2 | 0.217 |
| | | | | LiI | 0.492 | $YBr_3$ | 0.146 | | |
| I.E. 47 | Li,Y,F | Ca | Br,I | LiI | 0.491 | $YF_3$ | 0.122 | CaBr2 | 0.333 |
| | | | | | | $YBr_3$ | 0.055 | | |
| I.E. 48 | Li,Y,F | Ca | Br,I | LiI | 0.523 | $YF_3$ | 0.169 | CaBr2 | 0.260 |
| | | | | | | $YBr_3$ | 0.048 | | |

(continued)

| | Constituent element | | | Li source | | Y source | | M source | |
|---|---|---|---|---|---|---|---|---|---|
| | Li,Y,F | M | X | Chemical Formula | Mixture ratio | Chemical Formula | Mixture ratio | Chemical Formula | Mixture ratio |
| I.E. 49 | Li,Y,F | Ca | Br,I | LiBr | 0.525 | $YF_3$ | 0.170 | CaBr2 | 0.303 |
| I.E. 50 | Li,Y,F | Ca | Br,I | LiI | 0.544 | $YF_3$ | 0.119 | CaBr2 | 0.203 |
| | | | | | | $YBr_3$ | 0.134 | | |
| I.E. 51 | Li,Y,F | Ca | Cl,I | LiCl | 0.036 | $YF_3$ | 0.205 | $CaCl_2$ | 0.140 |
| | | | | LiI | 0.564 | $YCl_3$ | 0.055 | | |
| I.E. 52 | Li,Y,F | Ca | Cl,I | LiCl | 0.035 | $YF_3$ | 0.203 | $CaCl_2$ | 0.069 |
| | | | | LiI | 0.557 | $YCl_3$ | 0.136 | | |
| I.E. 53 | Li,Y,F | Ca | Cl,I | LiI | 0.628 | $YF_3$ | 0.190 | $CaCl_2$ | 0.130 |
| | | | | | | $YCl_3$ | 0.051 | | |
| I.E. 54 | Li,Y,F | Ca | Cl, Br,I | LiCl | 0.032 | $YF_3$ | 0.184 | CaBr2 | 0.227 |
| | | | | LiI | 0.507 | $YCl_3$ | 0.049 | | |
| I.E. 55 | Li,Y,F | Al | Cl, Br | LiF | 0.060 | $YCl_3$ | 0.257 | $AlCl_3$ | 0.031 |
| | | | | LiBr | 0.401 | $YBr_3$ | 0.251 | | |
| I.E. 56 | Li,Y,F | Zr | Cl, Br | LiF | 0.059 | $YCl_3$ | 0.209 | $ZrCl_4$ | 0.080 |
| | | | | LiBr | 0.367 | $YBr_3$ | 0.285 | | |
| I.E. 57 | Li,Y,F | Zr | Cl, Br | LiF | 0.059 | $YCl_3$ | 0.121 | $ZrCl_4$ | 0.160 |
| | | | | LiBr | 0.337 | $YBr_3$ | 0.323 | | |
| C.E. | Li,Y,F | Sr | Br | LiF | 0.016 | $YBr_3$ | 0.828 | SrBr2 | 0.156 |
| I.E. means Inventive Example; and C.E. means Comparative Example | | | | | | | | | |

[Table 2]

| | Li,Y,F | M | X | Conductivity [S/cm] | XRD peak position (2q, deg) | | | | |
|---|---|---|---|---|---|---|---|---|---|
| I.E. 1 | Li,Y,F | None | Br | 2.6E-04 | 27.50 | 31.88 | 45.68 | 54.20 | 56.90 |
| I.E. 2 | Li,Y,F | None | Br | 1.5E-04 | 27.62 | 31.98 | 45.96 | 54.54 | 57.06 |
| I.E. 3 | Li,Y,F | None | Br | 4.0E-05 | 27.76 | 32.18 | 46.18 | 54.84 | 57.42 |
| I.E. 4 | Li,Y,F | None | Br | 3.7E-07 | 28.04 | 32.50 | 46.70 | 55.34 | 58.02 |
| I.E. 5 | Li,Y,F | None | I | 6.1 E-06 | 25.54 | 29.58 | 42.36 | 50.14 | 52.54 |
| I.E. 6 | Li,Y,F | None | Br,I | 9.8E-05 | 27.42 | 31.74 | 45.64 | 54.04 | 56.62 |
| I.E. 7 | Li,Y,F | None | Br,I | 3.1 E-06 | 27.02 | 31.36 | 44.92 | 53.30 | 55.80 |
| I.E. 8 | Li,Y,F | None | Br,I | 7.4E-05 | 26.38 | 30.58 | 43.84 | 51.98 | 52.56 |
| I.E. 9 | Li,Y,F | None | Br,I | 4.8E-06 | 25.82 | 29.90 | 42.84 | 50.74 | 53.24 |
| I.E. 10 | Li,Y,F | None | Br,I | 5.8E-05 | 26.44 | 30.66 | 43.88 | 52.20 | 52.68 |
| I.E. 11 | Li,Y,F | None | Br,I | 1.8E-04 | 26.32 | 30.54 | 43.64 | 51.80 | 52.44 |
| I.E. 12 | Li,Y,F | None | Br,I | 3.4E-04 | 26.20 | 30.32 | 43.60 | 51.70 | 52.20 |

(continued)

|  | Li,Y,F | M | X | Conductivity [S/cm] | XRD peak position (2q, deg) | | | | |
|---|---|---|---|---|---|---|---|---|---|
| I.E. 13 | Li,Y,F | None | Br,I | 4.9E-04 | 26.12 | 30.38 | 43.46 | 51.56 | 52.04 |
| I.E. 14 | Li,Y,F | None | Br,I | 4.2E-04 | 26.14 | 30.32 | 43.42 | 51.50 | 54.06 |
| I.E. 15 | Li,Y,F | None | Br,I | 5.8E-05 | 26.14 | 30.26 | 43.36 | 51.32 | 53.94 |
| I.E. 16 | Li,Y,F | None | Br,I | 4.1 E-04 | 26.14 | 30.22 | 43.46 | 51.50 | 53.80 |
| I.E. 17 | Li,Y,F | None | Br,I | 3.7E-04 | 25.92 | 30.00 | 42.94 | 50.94 | 53.38 |
| I.E. 18 | Li,Y,F | None | Cl,Br | 1.2E-04 | 28.34 | 32.82 | 47.12 | 55.94 | 56.82 |
| I.E. 19 | Li,Y,F | None | Cl,I | 7.6E-05 | 25.60 | 29.58 | 42.42 | 50.16 | 50.92 |
| I.E. 20 | Li,Y,F | Ca | Br,I | 1.8E-05 | 27.54 | 31.84 | 45.74 | 54.34 | 55.02 |
| I.E. 21 | Li,Y,F | Ca | Br,I | 1.0E-05 | 27.36 | 31.70 | 45.54 | 53.98 | 54.66 |
| I.E. 22 | Li,Y,F | Ca | Br,I | 1.2E-04 | 26.34 | 30.62 | 43.94 | 52.02 | 52.50 |
| I.E. 23 | Li,Y,F | Ca | Br,I | 9.1 E-05 | 26.44 | 30.56 | 43.84 | 51.98 | 52.70 |
| I.E. 24 | Li,Y,F | Ca | Br,I | 1.5E-04 | 26.26 | 30.40 | 43.58 | 51.76 | 52.32 |
| I.E. 25 | Li,Y,F | Ca | Br,I | 1.6E-04 | 26.24 | 30.36 | 43.50 | 51.54 | 52.26 |
| I.E. 26 | Li,Y,F | Ca | Br,I | 2.0E-04 | 26.08 | 30.20 | 43.42 | 51.36 | 51.92 |
| I.E. 27 | Li,Y,F | Ca | Br,I | 2.0E-04 | 25.94 | 29.92 | 42.94 | 50.74 | 53.30 |
| I.E. 28 | Li,Y,F | Ca | Br,I | 3.2E-04 | 26.18 | 30.28 | 43.40 | 51.42 | 53.98 |
| I.E. 29 | Li,Y,F | Ca | Br,I | 3.3E-04 | 26.18 | 30.36 | 43.46 | 51.32 | 53.94 |
| I.E. 30 | Li,Y,F | Ca | Br,I | 1.7E-04 | 26.00 | 30.14 | 43.28 | 51.22 | 51.78 |
| I.E. 31 | Li,Y,F | Ca | Br,I | 1.0E-04 | 25.98 | 29.98 | 42.86 | 50.50 | 52.12 |
| I.E. 32 | Li,Y,F | Ca | Br,I | 5.8E-05 | 25.72 | 29.80 | 42.68 | 50.34 | 52.60 |
| I.E. 33 | Li,Y,F | Ca | Br,I | 3.7E-05 | 25.70 | 29.70 | 42.64 | 50.32 | 52.60 |
| I.E. 34 | Li,Y,F | Ca | Br,I | 1.4E-04 | 25.80 | 29.86 | 42.82 | 50.54 | 52.80 |
| I.E. 35 | Li,Y,F | Ca | Br,I | 1.2E-04 | 25.78 | 29.80 | 42.78 | 50.60 | 53.00 |
| I.E. 36 | Li,Y,F | Ca | Br,I | 8.7E-05 | 26.40 | 30.56 | 43.94 | 52.12 | 52.64 |
| I.E. 37 | Li,Y,F | Ca | Br,I | 1.2E-04 | 26.08 | 30.08 | 43.12 | 51.60 | 51.96 |
| I.E. 38 | Li,Y,F | Sr | Br,I | 1.2E-04 | 26.32 | 30.40 | 43.72 | 51.90 | 52.48 |
| I.E. 39 | Li,Y,F | Sr | Br,I | 6.4E-05 | 26.34 | 30.50 | 43.64 | 51.76 | 54.22 |
| I.E. 40 | Li,Y,F | Ba | Br,I | 9.4E-05 | 26.32 | 30.46 | 43.70 | 51.90 | 52.56 |
| I.E. 41 | Li,Y,F | Ba | Br,I | 1.3E-04 | 26.32 | 30.38 | 43.64 | 51.70 | 52.50 |
| I.E. 42 | Li,Y,F | Ba | Br,I | 1.1E-04 | 26.54 | 30.53 | 43.74 | 51.80 | 53.02 |
| I.E. 43 | Li,Y,F | Ba | Br,I | 1.4E-05 | 26.72 | 30.84 | 44.08 | 52.20 | 55.22 |
| I.E. 44 | Li,Y,F | Ca | Br,I | 1.9E-04 | 25.92 | 30.00 | 43.04 | 50.96 | 51.66 |
| I.E. 45 | Li,Y,F | Ca | Br,I | 1.9E-04 | 25.96 | 30.04 | 42.96 | 50.88 | 53.24 |
| I.E. 46 | Li,Y,F | Ca | Br,I | 3.3E-04 | 25.92 | 29.90 | 43.02 | 50.74 | 53.28 |
| I.E. 47 | Li,Y,F | Ca | Br,I | 8.7E-05 | 25.72 | 29.76 | 42.58 | 50.40 | 52.96 |
| I.E. 48 | Li,Y,F | Ca | Br,I | 6.6E-05 | 26.28 | 30.46 | 43.56 | 51.90 | 52.38 |
| I.E. 49 | Li,Y,F | Ca | Br,I | 2.6E-05 | 26.44 | 30.62 | 43.86 | 52.04 | 52.68 |
| I.E. 50 | Li,Y,F | Ca | Br,I | 2.1 E-04 | 25.84 | 29.78 | 42.72 | 50.76 | 53.04 |

(continued)

|  | Li,Y,F | M | X | Conductivity [S/cm] | XRD peak position (2q, deg) | | | | |
|---|---|---|---|---|---|---|---|---|---|
| I.E. 51 | Li,Y,F | Ca | Cl,I | 2.0E-05 | 25.40 | 29.37 | 42.34 | 50.14 | 50.56 |
| I.E. 52 | Li,Y,F | Ca | Cl,I | 9.1 E-05 | 25.40 | 29.29 | 41.94 | 49.88 | 50.52 |
| I.E. 53 | Li,Y,F | Ca | Cl,I | 2.8E-05 | 25.56 | 29.50 | 42.34 | 50.08 | 50.88 |
| I.E. 54 | Li,Y,F | Ca | Cl,Br,I | 9.2E-05 | 25.96 | 30.00 | 43.00 | 50.92 | 53.40 |
| I.E. 55 | Li,Y,F | Al | Cl,Br | 2.3E-04 | 28.02 | 32.48 | 46.58 | 55.20 | 58.10 |
| I.E. 56 | Li,Y,F | Zr | Cl,Br | 2.5E-04 | 28.18 | 32.62 | 46.96 | 55.48 | 58.10 |
| I.E. 57 | Li,Y,F | Zr | Cl,Br | 2.0E-04 | 28.20 | 32.64 | 46.86 | 55.76 | 58.34 |
| C.E. | Li,Y,F | Sr | Br | 1.0E-07 | 29.22 | 35.27 | 44.06 | 53.20 | None |
| I.E. means Inventive Example; and C.E. means Comparative Example | | | | | | | | | |

[Table 3]

|  | Li,Y,F | M | X | Conductivity [S/cm] | XRD peak position (q/q0) | | | | |
|---|---|---|---|---|---|---|---|---|---|
| I.E. 1 | Li,Y,F | None | Br | 2.6E-04 | 1.000 | 1.155 | 1.633 | 1.917 | 2.004 |
| I.E. 2 | Li,Y,F | None | Br | 1.5E-04 | 1.000 | 1.154 | 1.636 | 1.919 | 2.001 |
| I.E. 3 | Li,Y,F | None | Br | 4.0E-05 | 1.000 | 1.155 | 1.635 | 1.920 | 2.002 |
| I.E. 4 | Li,Y,F | None | Br | 3.7E-07 | 1.000 | 1.155 | 1.636 | 1.917 | 2.002 |
| I.E. 5 | Li,Y,F | None | I | 6.1 E-06 | 1.000 | 1.155 | 1.635 | 1.917 | 2.002 |
| I.E. 6 | Li,Y,F | None | Br,I | 9.8E-05 | 1.000 | 1.154 | 1.636 | 1.917 | 2.001 |
| I.E. 7 | Li,Y,F | None | Br,I | 3.1 E-06 | 1.000 | 1.157 | 1.635 | 1.920 | 2.003 |
| I.E. 8 | Li,Y,F | None | Br,I | 7.4E-05 | 1.000 | 1.156 | 1.636 | 1.920 | 1.940 |
| I.E. 9 | Li,Y,F | None | Br,I | 4.8E-06 | 1.000 | 1.155 | 1.635 | 1.918 | 2.006 |
| I.E. 10 | Li,Y,F | None | Br,I | 5.8E-05 | 1.000 | 1.156 | 1.634 | 1.924 | 1.940 |
| I.E. 11 | Li,Y,F | None | Br,I | 1.8E-04 | 1.000 | 1.157 | 1.633 | 1.919 | 1.941 |
| I.E. 12 | Li,Y,F | None | Br,I | 3.4E-04 | 1.000 | 1.154 | 1.638 | 1.924 | 1.941 |
| I.E. 13 | Li,Y,F | None | Br,I | 4.9E-04 | 1.000 | 1.160 | 1.638 | 1.925 | 1.941 |
| I.E. 14 | Li,Y,F | None | Br,I | 4.2E-04 | 1.000 | 1.156 | 1.636 | 1.921 | 2.010 |
| I.E. 15 | Li,Y,F | None | Br,I | 5.8E-05 | 1.000 | 1.154 | 1.634 | 1.915 | 2.005 |
| I.E. 16 | Li,Y,F | None | Br,I | 4.1 E-04 | 1.000 | 1.153 | 1.637 | 1.921 | 2.001 |
| I.E. 17 | Li,Y,F | None | Br,I | 3.7E-04 | 1.000 | 1.154 | 1.632 | 1.917 | 2.003 |
| I.E. 18 | Li,Y,F | None | Cl,Br | 1.2E-04 | 1.000 | 1.154 | 1.633 | 1.916 | 1.944 |
| I.E. 19 | Li,Y,F | None | Cl,I | 7.6E-05 | 1.000 | 1.152 | 1.633 | 1.913 | 1.940 |
| I.E. 20 | Li,Y,F | Ca | Br,I | 1.8E-05 | 1.000 | 1.152 | 1.633 | 1.918 | 1.941 |
| I.E. 21 | Li,Y,F | Ca | Br,I | 1.0E-05 | 1.000 | 1.155 | 1.637 | 1.919 | 1.941 |
| I.E. 22 | Li,Y,F | Ca | Br,I | 1.2E-04 | 1.000 | 1.159 | 1.642 | 1.925 | 1.941 |
| I.E. 23 | Li,Y,F | Ca | Br,I | 9.1 E-05 | 1.000 | 1.152 | 1.632 | 1.916 | 1.941 |
| I.E. 24 | Li,Y,F | Ca | Br,I | 1.5E-04 | 1.000 | 1.154 | 1.634 | 1.921 | 1.941 |
| I.E. 25 | Li,Y,F | Ca | Br,I | 1.6E-04 | 1.000 | 1.154 | 1.632 | 1.915 | 1.940 |

(continued)

|  | Li,Y,F | M | X | Conductivity [S/cm] | XRD peak position (q/q0) | | | | |
|---|---|---|---|---|---|---|---|---|---|
| I.E. 26 | Li,Y,F | Ca | Br,I | 2.0E-04 | 1.000 | 1.155 | 1.639 | 1.921 | 1.940 |
| I.E. 27 | Li,Y,F | Ca | Br,I | 2.0E-04 | 1.000 | 1.150 | 1.631 | 1.909 | 1.998 |
| I.E. 28 | Li,Y,F | Ca | Br,I | 3.2E-04 | 1.000 | 1.153 | 1.633 | 1.915 | 2.004 |
| I.E. 29 | Li,Y,F | Ca | Br,I | 3.3E-04 | 1.000 | 1.156 | 1.635 | 1.912 | 2.002 |
| I.E. 30 | Li,Y,F | Ca | Br,I | 1.7E-04 | 1.000 | 1.156 | 1.639 | 1.921 | 1.941 |
| I.E. 31 | Li,Y,F | Ca | Br,I | 1.0E-04 | 1.000 | 1.151 | 1.625 | 1.898 | 1.954 |
| I.E. 32 | Li,Y,F | Ca | Br,I | 5.8E-05 | 1.000 | 1.155 | 1.635 | 1.911 | 1.991 |
| I.E. 33 | Li,Y,F | Ca | Br,I | 3.7E-05 | 1.000 | 1.152 | 1.635 | 1.912 | 1.992 |
| I.E. 34 | Li,Y,F | Ca | Br,I | 1.4E-04 | 1.000 | 1.154 | 1.635 | 1.912 | 1.992 |
| I.E. 35 | Li,Y,F | Ca | Br,I | 1.2E-04 | 1.000 | 1.153 | 1.635 | 1.916 | 2.000 |
| I.E. 36 | Li,Y,F | Ca | Br,I | 8.7E-05 | 1.000 | 1.154 | 1.638 | 1.924 | 1.942 |
| I.E. 37 | Li,Y,F | Ca | Br,I | 1.2E-04 | 1.000 | 1.150 | 1.629 | 1.929 | 1.941 |
| I.E. 38 | Li,Y,F | Sr | Br,I | 1.2E-04 | 1.000 | 1.152 | 1.635 | 1.922 | 1.942 |
| I.E. 39 | Li,Y,F | Sr | Br,I | 6.4E-05 | 1.000 | 1.154 | 1.631 | 1.916 | 2.000 |
| I.E. 40 | Li,Y,F | Ba | Br,I | 9.4E-05 | 1.000 | 1.154 | 1.635 | 1.922 | 1.945 |
| I.E. 41 | Li,Y,F | Ba | Br,I | 1.3E-04 | 1.000 | 1.151 | 1.633 | 1.915 | 1.943 |
| I.E. 42 | Li,Y,F | Ba | Br,I | 1.1E-04 | 1.000 | 1.147 | 1.623 | 1.903 | 1.945 |
| I.E. 43 | Li,Y,F | Ba | Br,I | 1.4E-05 | 1.000 | 1.151 | 1.624 | 1.904 | 2.006 |
| I.E. 44 | Li,Y,F | Ca | Br,I | 1.9E-04 | 1.000 | 1.154 | 1.636 | 1.918 | 1.943 |
| I.E. 45 | Li,Y,F | Ca | Br,I | 1.9E-04 | 1.000 | 1.154 | 1.630 | 1.912 | 1.995 |
| I.E. 46 | Li,Y,F | Ca | Br,I | 3.3E-04 | 1.000 | 1.150 | 1.635 | 1.910 | 1.999 |
| I.E. 47 | Li,Y,F | Ca | Br,I | 8.7E-05 | 1.000 | 1.154 | 1.631 | 1.913 | 2.003 |
| I.E. 48 | Li,Y,F | Ca | Br,I | 6.6E-05 | 1.000 | 1.156 | 1.632 | 1.925 | 1.941 |
| I.E. 49 | Li,Y,F | Ca | Br,I | 2.6E-05 | 1.000 | 1.155 | 1.633 | 1.918 | 1.940 |
| I.E. 50 | Li,Y,F | Ca | Br,I | 2.1 E-04 | 1.000 | 1.149 | 1.629 | 1.917 | 1.997 |
| I.E. 51 | Li,Y,F | Ca | Cl,I | 2.0E-05 | 1.000 | 1.153 | 1.643 | 1.927 | 1.942 |
| I.E. 52 | Li,Y,F | Ca | Cl,I | 9.1 E-05 | 1.000 | 1.150 | 1.628 | 1.918 | 1.941 |
| I.E. 53 | Li,Y,F | Ca | Cl,I | 2.8E-05 | 1.000 | 1.151 | 1.633 | 1.913 | 1.942 |
| I.E. 54 | Li,Y,F | Ca | Cl,Br,I | 9.2E-05 | 1.000 | 1.152 | 1.632 | 1.914 | 2.000 |
| I.E. 55 | Li,Y,F | Al | Cl,Br | 2.3E-04 | 1.000 | 1.155 | 1.633 | 1.914 | 2.006 |
| I.E. 56 | Li,Y,F | Zr | Cl,Br | 2.5E-04 | 1.000 | 1.154 | 1.637 | 1.912 | 1.995 |
| I.E. 57 | Li,Y,F | Zr | Cl,Br | 2.0E-04 | 1.000 | 1.153 | 1.632 | 1.920 | 2.001 |
| C.E. | Li,Y,F | Sr | Br | 1.0E-07 | 1.000 | 1.201 | 1.487 | 1.775 | None |
| I.E. means Inventive Example; and C.E. means Comparative Example | | | | | | | | | |

<< Discussion >>

It can be seen that high ion conductivity of not less than $2.5 \times 10^{-7}$ S/cm near room temperature is exhibited in the inventive examples 1 to 57, as compared with the comparative example.

As understood from comparison of the inventive examples 38 and 39 to the comparative example, although Li, Y, Sr, Br, and F are included as the constituent elements in both of the inventive examples 38 to 39 and the comparative example, in the X-ray diffraction pattern of the inventive examples 38 and 39, two or more peaks which are clearly separable are observed within a range of 24° to 35°, one or more peaks are observed within a range of 40° to 48°, and two or more peaks are observed within a range of 48° to 59°. On the other hand, in the X-ray diffraction pattern of the comparative example, two or more peaks which are clearly separable are observed within a range of 24° to 35°, and one or more peaks are observed within a range of 40° to 48°; however, two or more peaks which are clearly separable are absent within a range of 48° to 59°. Therefore, the crystal structures in the inventive examples 38 and 39 are different from the crystal structure in the comparative example. The difference of the crystal structure is more prominent in the diffraction patterns in which the normalized scattering vector q/qo is used as the horizontal axis. The diffraction patterns are shown in Table 3 or FIG. 3. In other words, in the inventive examples 38 and 39, peaks are observed at q/qo = 1.00, 1.15, 1.63, 1.92, and 2.00 using the value of qo in the peak within the range of 24 °to 35° as a reference. On the other hand, in the comparative example, peaks are observed in different positions. So, the crystal structure is different.

In addition, the conductivity is significantly higher in the inventive examples 1 to 57 than in $Li_3YCl_6$, which is disclosed in Non-Patent Literature 1, and in $Li_3YBr_6$, which is disclosed in Non-Patent Literature 2. Note that ion conductivity has not been observed at room temperature in a case where $Li_3YCl_6$ or $Li_3YBr_6$ was used.

In addition, the conductivity is higher in the inventive examples 1 to 57 than in $Li_3InBr_3F_3$, which is disclosed in Non-Patent Literature 3. Note that $Li_3InBr_3F_3$ has ion conductivity at room temperature of $2 \times 10^{-7}$ S/cm.

Therefore, the solid electrolyte material of the first embodiment exhibits high ion conductivity of not less than $2.0 \times 10^{-7}$ S/cm.

In addition, the solid electrolyte material of the second embodiment exhibits high ion conductivity of not less than $2 \times 10^{-7}$ S/cm.

In addition, since the materials of the inventive examples 1 to 57 do not include sulfur as a constituent element, hydrogen sulfide is not generated.

As described above, it is proved that the solid electrolyte material according to the present disclosure is an electrolyte material that does not generate hydrogen sulfide and exhibits high lithium ion conductivity.

INDUSTRIAL APPLICABILITY

The battery of the present disclosure can be used as, for example, an all-solid lithium secondary battery.

REFERENTIAL SIGNS LIST

| | |
|---|---|
| 100 | Solid electrolyte particles |
| 201 | Positive electrode |
| 202 | Electrolyte layer |
| 203 | Negative electrode |
| 204 | Positive electrode active material particles |
| 205 | Negative electrode active material particles |
| 300 | Pressure-molding die |
| 301 | Frame |
| 302 | Lower punch part |
| 303 | Upper punch part |
| 1000 | Battery |

**Claims**

1. A solid electrolyte material consisting of Li, M, X, and F,

   wherein
   M is Y, or includes Y and at least one kind selected from the group consisting of metalloid elements and metal elements other than Li;
   X is at least one kind selected from the group consisting of Cl, Br, and I;
   two or more peaks are present within a range where a value of a diffraction angle $2\theta$ is not less than 24° and not more than 35° in an X-ray diffraction pattern of the solid electrolyte material using Cu-Ka as a radiation source; one or more peaks are present within a range where the value of the diffraction angle 2θ is not less than 40° and less than 48° in the X-ray diffraction pattern of the solid electrolyte material using Cu-Ka as the radiation source; and

two or more peaks are present within a range where the value of the diffraction angle 2θ is not less than 48° and not more than 59° in the X-ray diffraction pattern of the solid electrolyte material using Cu-Ka as the radiation source.

2. The solid electrolyte material according to claim 1, wherein
a sublattice of an anion forms a cubic close-packed structure or a structure in which the cubic close-packed structure has been distorted.

3. The solid electrolyte material according to claim 1 or 2, wherein
M includes Y and at least one kind selected from the group consisting of Ca, Sr, Ba, Zr, and Al.

4. A battery comprising:

the solid electrolyte material according to any one of claims 1 to 3;
a positive electrode;
a negative electrode; and
an electrolyte layer disposed between the positive electrode and the negative electrode,
wherein
at least one selected from the group consisting of the positive electrode, the negative electrode, and the electrolyte layer includes the solid electrolyte material.

5. A solid electrolyte material consisting of Li, M, X, and F,

wherein
M is Y, or includes Y and at least one kind selected from the group consisting of metalloid elements and metal elements other than Li;
X is at least one kind selected from the group consisting of Cl, Br, and I;
a reference peak appears within a range where a value of q is not less than 1.76 $\text{Å}^{-1}$ and not more than 2.18 $\text{Å}^{-1}$ in a first converted pattern provided by converting an X-ray diffraction pattern of the solid electrolyte material in such a manner that a horizontal axis thereof is converted from a diffraction angle 2θ into q;

where

$$q = 4\pi\sin\theta/\lambda;$$

and
$\lambda$ is a wavelength of an X-ray used for an X-ray diffraction;

one or more peaks appear within a range where a value of q/qo is not less than 1.14 and not more than 1.17 in a second converted pattern provided by converting the X-ray diffraction pattern in such a manner that the horizontal axis thereof is converted from the diffraction angle 2θ into q/qo;

where
qo is a value of q which corresponds to the reference peak in the first converted pattern; and

one or more peaks appear within a range where the value of q/qo is not less than 1.62 and not more than 1.65 in the second converted pattern.

6. The solid electrolyte material according to claim 5, wherein

one or more peaks appear within a range where the value of q/qo is not less than 1.88 and not more than 1.94 in the second converted pattern; and

one or more peaks appear within a range where the value of $q/q_o$ is not less than 1.9 and not more than 2.1 in the second converted pattern.

7. The solid electrolyte material according to claim 5 or 6, wherein
a sublattice of an anion forms a cubic close-packed structure or a structure in which the cubic close-packed structure has been distorted.

8. The solid electrolyte material according to any one of claims 5 to 7, wherein
M includes Y and at least one kind selected from the group consisting of Ca, Sr, Ba, Zr, and Al.

9. A battery comprising:

the solid electrolyte material according to any one of claims 5 to 8;
a positive electrode;
a negative electrode; and
an electrolyte layer disposed between the positive electrode and the negative electrode,
wherein
at least one selected from the group consisting of the positive electrode, the negative electrode, and the electrolyte layer includes the solid electrolyte material.

FIG. 1

FIG. 2

C.E.: Comparative Example
I.E.: Inventive Example

FIG. 3

C.E.: Comparative Example
I.E.: Inventive Example

FIG. 4

FIG. 5

FIG. 6

**INTERNATIONAL SEARCH REPORT**

| International application No. |
| --- |
| PCT/JP2018/042061 |

**A. CLASSIFICATION OF SUBJECT MATTER**
Int.Cl. H01B1/06(2006.01)i, C01F17/00(2006.01)i, C01G25/00(2006.01)i, H01M4/13(2010.01)i, H01M4/62(2006.01)i, H01M10/052(2010.01)i, H01M10/0562(2010.01)i
According to International Patent Classification (IPC) or to both national classification and IPC

**B. FIELDS SEARCHED**

Minimum documentation searched (classification system followed by classification symbols)
Int.Cl. H01B1/06, C01F17/00, C01G25/00, H01M4/13, H01M4/62, H01M10/052, H01M10/0562

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2006-244734 A (NATIONAL UNIVERSITY CORPORATION SHIZUOKA UNIVERSITY) 14 September 2006, claims, paragraphs [0006], [0036]-[0040], examples (Family: none) | 1-9 |

☒ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 07.02.2019 | 19.02.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/042061

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-011901 A (TOYOTA MOTOR CORPORATION) 19 January 2015, claims, paragraphs [0007], [0034], [0045], examples<br>& US 2016/0149259 A1, claims, paragraphs [0010], [0050], [0051], [0063], examples & WO 2014/208239 A1 & EP 3016198 A1 & CN 105324878 A & KR 10-2016-0010555 A | 1-9 |
| A | JP 2015-032529 A (TOYOTA MOTOR CORPORATION) 16 February 2015, claims, paragraphs [0005], [0006], [0012], [0013], examples<br>(Family: none) | 1-9 |
| A | JP 2012-246196 A (OHARA INC.) 13 December 2012, claims, paragraphs [0001], [0011], [0029]-[0039], examples<br>& US 2012/0308900 A1, claims, paragraphs [0003], [0015], [0038]-[0049], examples | 1-9 |
| A | JP 2017-518622 A (BYD COMPANY LIMITED) 06 July 2017, claims, paragraphs [0001], [0008], [0050], examples<br>& US 2016/0359193 A1, claims, paragraphs [0002], [0008], [0052], examples & WO 2015/144074 A1 & EP 3080860 A1 & CN 104953175 A & KR 10-2016-0113183 A | 1-9 |
| A | WO 2017/154766 A1 (SEIKO EPSON CORPORATION) 14 September 2017, claims, paragraphs [0010], [0069], [0081], examples<br>& JP 2017-162728 A | 1-9 |
| P, A | WO 2018/025582 A1 (PANASONIC INTELLECTUAL PROPERTY MANAGEMENT CO., LTD.) 08 February 2018, entire text<br>(Family: none) | 1-9 |

Form PCT/ISA/210 (continuation of second sheet) (January 2015)

**EP 3 745 421 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011129312 A

### Non-patent literature cited in the description

- *Z. Anorg. Allg. Chem.,* 1997, vol. 623, 1067-1073
- *Z. Anorg. Allg. Chem.,* 1997, vol. 623, 1352-1356
- **Y. TOMITA.** *Recent Innovations in Chemical Engineering,* 2017, vol. 10, 12-17